# EUROPÄISCHE PATENTANMELDUNG

(11) **EP 0 581 213 A1**
(43) Veröffentlichungstag der Anmeldung: **02.02.1994**
(21) Anmeldenummer: 93111826.9
(22) Anmeldetag: 24.07.1993
(51) Int. Cl.: B01D 17/02

(54) **Vorrichtung zum Ölabscheiden**

(30) Priorität: 30.07.1992 DE 9210212 U
(71) Anmelder: MASTR TECHNISCHE PRODUKTE GMBH, D-74076 Heilbronn (DE)
(72) Erfinder: Fleck, Adolf, Dipl.-Ing., D-76689 Karlsdorf-Neuthard (DE)
(74) Vertreter: Müller, Hans, Dipl.-Ing.

(57) **Zusammenfassung**

Eine Vorrichtung zum Ölabscheiden (10), mit einem Behälter (12) zum Sammeln und Trennen des Öl-Wasser-Gemisches (18), und einer Pumpe (20), mit deren Hilfe das Gemisch (18) in den Behälter (12) einfüllbar ist, zeichnet sich dadurch aus, daß der Behälter 812) als Unterdruckbehälter ausgebildet und vakuumdicht verschließbar ist und eine Saugpumpe (20) strömungsseitig hinter dem Behälter (12 vorhanden ist, mit der ein Unterdruck in dem Behälter 812) erzeugbar und so das Gemisch (18) in den Behälter (12) einsaugbar ist.

## Beschreibung

### TECHNISCHES GEBIET

Die Erfindung betrifft eine Vorrichtung zum Ölabscheiden. Derartige Vorrichtungen kommen bei der Ölschadensabwehr nach Unfällen zum Einsatz. Infolge solcher Unfälle hat sich das in mehr oder weniger großen Mengen freigewordene Öl mit Wasser vermischt. Dieses Wasser kann ein See, ein Fluß oder dergleichen. Nachdem die beispielsweise auf der Wasseroberfläche des Sees oder des Flusses treibende Öllache durch geeignete Barrieren in seiner flächigen Ausdehnung eingegrenzt worden ist, muß das Öl mit geeigneten Vorrichtungen aus dem Wasser entfernt werden.

### STAND DER TECHNIK

Es ist bekannt, durch eine möglichst wenig Emulsion bildende Pumpe das einzusammelnde Öl-Wasser-Gemisch in einen Abscheidebehälter zu pumpen. In diesem Behälter erfolgt die Abscheidung, d. h. die Trennung zwischen Öl und Wasser, durch Ausnutzung der Schwerkraft und unterschiedlichen Dichte von Wasser und Öl. Die Öltröpfchen erfahren im Wasser einen Auftrieb, so daß sie auf der Wasseroberfläche aufschwimmen und von dort abgezogen werden können. Kurz vor dem Ausfluß aus dem Behälter wird das Wasser bzw. das mit Öl noch verunreinigte Wasser durch einen Filter aus Ölbindemitteln hindurchgeleitet. Dadurch sollen kurz vor dem Ausfluß des Ölabscheiders die noch in dem "Reinwasser" vorhandenen Reste von Öl zurückgehalten werden.

Es läßt sich nicht vermeiden, daß durch die in der Zuleitung zum Behälter vorhandene Pumpe Öl-Wasser-Emulsionen gebildet werden. Dies hat zur Folge, daß sich dieses Öl nicht mehr vom Wasser trennen läßt. Außerdem ist die Abscheidung allein durch die Schwerkraft der unterschiedlichen Medien nicht möglich. Dazu ist die Verweilzeit des Öl-Wasser-Gemisches im Behälter in aller Regel zu kurz. Allerdings wäre es möglich, diesem letzteren Nachteil durch entsprechend große Behälter abzuhelfen; nur wären diese Behälter nicht mehr für einen mobilen Einsatz und damit zum Einsatz bei Unfällen geeignet. Der zusätzlich vorhandene Filter innerhalb des Behälters verschmutzt außerdem relativ schnell, so daß er bereits nach kurzen Betriebszeiten ausgewechselt werden muß. Dies ist zeitaufwendig und stört den Betriebsablauf.

### DARSTELLUNG DER ERFINDUNG

Ausgehend von diesem vorbekannten Stand der Technik liegt der Erfindung die Aufgabe zugrunde, eine verbesserte Vorrichtung zum Ölabscheiden anzugeben, die bei der Ölschadensabwehr nach Unfällen problemlos eingesetzt werden kann.

Diese Erfindung ist durch die Merkmale des Patentanspruchs 1 gegeben. So zeichnet sich die aus dem Stand der Technik bekannte Vorrichtung zum Ölabscheiden erfindungsgemäß dadurch aus, daß der Abscheidbehälter als Unterdruckbehälter ausgebildet und vakuumdicht verschließbar ist, und daß eine Saugpumpe strömungsseitig hinter dem Behälter vorhanden ist, mit der ein Unterdruck in dem Behälter erzeugbar und so das Öl-Wasser-Gemisch in den Behälter eingesaugt werden kann.

Mit dieser Vorrichtung wird das Öl-Wasser-Gemisch nicht in den Behälter eingepumpt sondern eingesaugt. Dadurch wird der Einbau einer Pumpe in der Förderleitung zum Behälter überflüssig, so daß das Bilden von Emulsionen, wie im Stand der Technik unvermeidbar, nicht auftreten kann. Derartige Behälter können problemlos als Unterdruckbehälter und damit vakuumdicht hergestellt werden, so daß sie ohne weiteres transportiert werden können. Die Mobilität eines derartigen Ölabscheiders ist daher ohne weiteres gegeben. Die erfindungsgemäß eingesetzte Saugpumpe kommt mit dem Öl-Wasser-Gemisch nicht mehr in Berührung, so daß ein Verschmutzen der Pumpe und auch das Bilden von Emulsionen nicht befürchtet werden müssen.

Nach einer wesentlichen Weiterbildung der Erfindung hat es sich als sinnvoll herausgestellt, Luft in den Behälter so einzuleiten, daß die Luft von unten nach oben durch den Behälter hindurchströmen kann. Mit dieser Maßnahme läßt sich die Öltrennung innerhalb des Behälters verstärken. Dabei gilt dies ganz allgemein und nicht nur bei der erfindungsgemäßen Vorrichtung. Die von unten nach oben das Flüssigkeitsgemisch durchströmenden Luftblasen kommen mit den in dem Gemisch vorhandenen hydrophoben Öltröpfchen in Berührung und tragen diese Öltröpfchen mit nach oben. Dadurch wird der Reinigungsvorgang, d. h. der Trennvorgang zwischen Öl und Wasser, verstärkt. Das Einbringen der Luft kann entweder extern aus einer Preßluftflasche über Druckminderer, Schläuche und Auslaßventil oder vakuumgesteuert aus der Umgebungsluft erfolgen. Als Regelgröße kann dazu die Stellung einer Öffnungsklappe am Eingang des Behälters dienen.

Zur Verstärkung der Abscheidewirkung kann eine Kugelschüttung als oleophilem Material in den Behälter eingebracht werden. Die Schüttung ist dabei so zu gestalten, daß für das Wasser, das Öl bzw. die Luft Durchströmöffnungen freibleiben. Die an den Schüttungskugeln vorbeistreichende, von unten einströmende Luft trägt dabei das an der Oberfläche der Kugeln haftende Öl mit nach oben.

Gemäß einem bevorzugten Ausführungsbeispiel besitzt der Behälter eine Einlaßöffnung für das einzusaugende Öl-Wasser-Gemisch, eine Auslaßöffnung für das vom Öl abzuscheidende Wasser und in Strömungsrichtung hinter der Auslaßöffnung für das abzuscheidende Wasser eine leitungsmäßig angeschlossene Saugpumpe. Außerdem ist in dem Behälter ein unten und oben offenes Standrohr zum Eintritt des in dem Behälter abgeschiedenen Wassers vorhanden. Die zur Pumpe führende Leitung ragt teilweise von oben in das Standrohr hinein. Dadurch saugt die Pumpe die in dem Standrohr vorhandene Flüssigkeit teilweise aus dem Behälter heraus. Von unten strömt die in dem Behälter vorhandene Flüssigkeit in das Standrohr nach. Nachdem das Öl sich aber oben auf dem Flüssigkeitsgemisch außerhalb des Standrohres ansammelt, fließt praktisch gereinigtes Wasser in das Standrohr nach. Dieses Wasser wird dann aus dem Behälter abgesaugt. Über eine separate Auslaßöffnung wird das oben auf dem Wasser schwimmende Öl aus dem Behälter herausgesaugt.

Um zu verhindern, daß sich das jeweils eingesaugte Öl-Wasser-Gemisch mit der bereits im Behälter befindlichen, mehr oder weniger bereits getrennten Flüssigkeit allzu stark vermischt, ist die Einlaßöffnung für das Öl-Wasser-Gemisch vorzugsweise oberhalb der Auslaßöffnung für das obenauf schwimmende Öl angeordnet. Die Gefahr einer Vermischung kann zusätzlich dadurch gemindert werden, daß die Einlaßleitung für das Öl-Wasser-Gemisch in einer Rutsche oder Rinne innerhalb des Behälters endet.

Weitere Ausgestaltungen und Vorteile der Erfindung sind den in den Ansprüchen weiterhin aufgeführten Merkmalen sowie dem nachfolgenden Ausführungsbeispiel zu entnehmen.

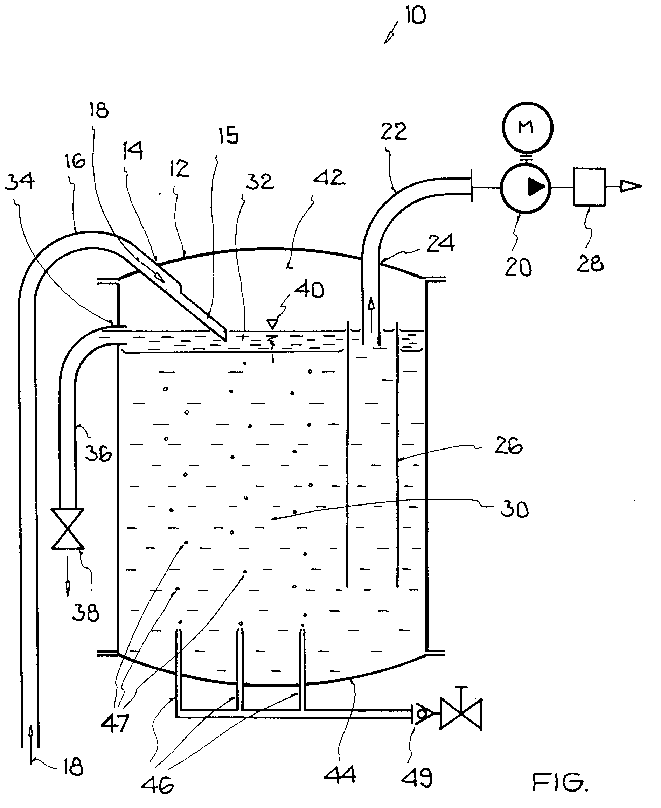

### KURZE BESCHREIBUNG DER ZEICHNUNG

Die Erfindung wird im folgenden anhand des in der Zeichnung dargestellten Ausführungsbeispiels näher beschrieben und erläutert. Die einzige Figur zeigt den Querschnitt durch eine Ausführungsform der erfindungsgemäßen Vorrichtung zum Ölabscheiden.

### WEGE ZUR AUSFÜHRUNG DER ERFINDUNG

Eine Vorrichtung zum Ölabscheiden 10 weist einen Behälter 12 auf. Dieser Behälter ist vakuumfest ausgebildet. Er besitzt eine derartige Größe, daß er mobil gehandhabt werden kann. Ein derartiger Behälter 12 könnte beispielsweise ein vakuumfestes, standsicheres Faß sein. Der im vorliegenden Beispielsfall einteilig ausgebildete Behälter 12 könnte auch mehrteilig sein und/oder mit einem weiteren derartigen oder anderen Behältern kombinierbar ausgebildet sein. Auch die Form des Behälters ist in weiten Grenzen beliebig, so könnte der Behälter im Querschnitt rund oder auch polygonartig wie z. B. rechteckig sein. Wichtig ist seine Vakuumfestigkeit. Außerdem ist im vorliegenden Beispielsfall wichtig, daß er transportfähig ist bzw. bleibt. Dies wird aufgrund seines relativ geringen Gewichtes auch für relativ große Behälter leicht möglich sein. Dadurch kann er ohne große Probleme bei der Ölschadensabwehr nach sogenannten Ölunfällen zum Einsatz kommen.

Der Behälter 12 besitzt eine Einlaßöffnung 14, an die eine Leitung 16 angeschlossen ist bzw. angeschlossen werden kann. Durch diese Zuleitung 16 wird das nach einem Unfall einzusammelnde Öl-Wasser-Gemisch (Pfeil 18) in den Behälter 12 eingeleitet.

Das Einleiten des Öl-Wasser-Gemisches 18 erfolgt mit Hilfe einer Hydraulikpumpe (Saugpumpe) 20. Diese Pumpe 20 ist in einer Auslaßleitung 22 leitungsmäßig vorhanden, die durch eine im Behälter 12 vorhandene Auslaßöffnung 24 in das Innere eines Standrohres 26 hineinführt. Strömungsmäßig hinter der Hydraulikpumpe 20 ist ein Filter 28 vorhanden, durch den noch die Restverunreinigungen in der wasserführenden Auslaßleitung 22 herausgefiltert werden können.

In das von oben offene Standrohr 26 fließt von unten die in dem Behälter 12 vorhandene Flüssigkeit 30 nach. Diese Flüssigkeit 30 wird dann durch die Pumpe 20 abgesaugt.

Bezüglich der Zuleitung 16 ist der Querschnitt innerhalb des Behälters 12 wesentlich größer. Dadurch sinkt die Strömungsgeschwindigkeit innerhalb des Behälters 12 im Verhältnis zu der Strömungsgeschwindigkeit innerhalb der Zuleitung 16 stark ab. Auf diese Weise können die in dem Gemisch 18 vorhandenen Ölbestandteile im Bereich des Behälters 12 nach oben in der Flüssigkeit 30 emporsteigen. Es bildet sich so auf der Oberfläche der Flüssigkeit 30 ein Ölgemisch 32. Dieses Ölgemisch 32 kann durch eine Auslaßöffnung 34 hindurch abgeführt werden. So ist die Auslaßöffnung 34 an einer weiteren Leitung 36 angeschlossen, in der ein Ölablaßventil 38 den Ausfluß aus dem Behälter 12 regelt. Die Einlaßöffnung 14 für das Öl-Wasser-Gemisch 18 ist oberhalb der Auslaßöffnung 34 für das Ölgemisch 32 angeordnet. Damit fließt das zufließende Gemisch 18 von oben auf die Flüssigkeit 30 zu. Da außerdem das Endstück der Einlaßleitung 16 innerhalb des Behälters 12 als Rinne 15 ausgebildet ist, vermischt sich das zufließende Gemisch 18 wünschenswert gering mit der bereits in Abscheidung befindlichen Flüssigkeit 30.

Oberhalb des Flüssigkeitsspiegels 40 ist im Innenraum 42 bei Betrieb der Hydraulikpumpe 20 ein Vakuum vorhanden. Auf diese Weise kann mit Hilfe der Hydraulikpumpe (Saugpumpe) 20 durch die Zuleitung 16 das Öl-Wasser-Gemisch 18 in den Behälter 12 hineingesaugt werden.

Im Bodenbereich 44 sind Einleitungsdüsen 46 für Luft vorhanden. Die durch diese Düsen 46 von unten in den Behälter 12 eingeleitete Luftmenge strömt in Form von Luftblasen 47 durch die Flüssigkeit 30 nach oben und gelangt dann in den Innenraum 42.

Beim Aufsteigen der durch die Einleitungsdüsen 46 eingeleiteten Luftblasen 47 vereinigen sich diese mit dem in der Flüssigkeit 30 herumschwebenden hydrophoben Öltröpfchen. Die Luftblasen 47 nehmen diese hydrophoben Öltröpfchen mit nach oben, so daß auch dieses Öl sich oben wie das sonstige Ölgemisch 32 sammelt. Im Standrohr 26 ist somit mehr oder weniger vollständig gereinigtes, d. h. von Öl befreites Wasser vorhanden.

Die dargestellte Zeichnung ist lediglich schematisch zu verstehen. So kann aus Gründen einer selbständigen Standfestigkeit der dargestellte Behälter 12 sinnvollerweise in Form eines selbststehenden Fasses ausgebildet werden. Dabei wird selbstverständlich der Bodenbereich 44 des Behälters 12 so ausgebildet, daß seine Standfestigkeit nicht durch die Einleitungsdüsen 46 beeinträchtigt werden kann.

## Patentansprüche

1. Vorrichtung zum Ölabscheiden (10), mit
- einem Behälter (12) zum Sammeln und Trennen des Öl-Wasser-Gemisches (18),
- einer Pumpe (20), mit deren Hilfe das Gemisch (18) in den Behälter (12) einfüllbar ist,
**dadurch gekennzeichnet,** daß
- der Behälter (12) als Unterdruckbehälter ausgebildet und vakuumdicht verschließbar ist,
- eine Saugpumpe (20) strömungsseitig hinter dem Behälter (12) vorhanden ist, mit der ein Unterdruck in dem Behälter (12) erzeugbar und so das Gemisch (18) in den Behälter (12) einsaugbar ist.

2. Vorrichtung nach Anspruch 1,
**dadurch gekennzeichnet,** daß Luft (47) in den Behälter (12) so einleitbar ist, daß die Luft (47) von unten nach oben durch den Behälter (12) hindurchströmen kann.

3. Vorrichtung nach einem der vorstehenden Ansprüche,
**dadurch gekennzeichnet,** daß
- der unterdruckfeste Behälter (12) eine Einlaßöffnung (14) für das einzusaugende Öl-Wasser-Gemisch (18), eine Auslaßöffnung (24) für das vom Öl abzuscheidende Wasser und eine Auslaßöffnung (34) für das abzuscheidende Öl aufweist,
- in Strömungsrichtung hinter der Auslaßöffnung (24) für das abzuscheidende Wasser die Saugpumpe (20) leitungsmäßig angeschlossen ist,
- ein Standrohr (26) in dem Behälter (12) vorhanden ist,
- das Standrohr (26) unten und oben offen ist zum Eintritt des in dem Behälter (12) abgeschiedenen Wassers,
- von oben in das Standrohr eine Leitung einführbar ist, die an die aus dem Behälter (12) zur Pumpe (20) führende Auslaßleitung (22) für das Wasser anschließbar ist.

4. Vorrichtung nach Anspruch 3,
**dadurch gekennzeichnet,** daß in Strömungsrichtung hinter der Saugpumpe (20), auf der Druckseite dieser Pumpe (20), ein Filter (28) vorhanden ist, durch den das im Behälter (12) abgeschiedene Wasser hindurchdrückbar ist.

5. Vorrichtung nach einem der vorstehenden Ansprüche,
**dadurch gekennzeichnet,** daß durch den Boden (44) und/oder durch den unteren Wandbereich des Behälters (12) hindurch Luft (47) in den das Standrohr (26) umgebenden Innenbereich des Behälters (12) einleitbar ist.

6. Vorrichtung nach einem der vorstehenden Ansprüche,
**dadurch gekennzeichnet,** daß die Einlaßöffnung (14) für das Öl-Wasser-Gemisch (18) oberhalb der Auslaßöffnung (34) für das abgeschiedene Öl vorhanden ist.

7. Vorrichtung nach einem der vorstehenden Ansprüche,
**dadurch gekennzeichnet,** daß die Einlaßleitung (16) für das Öl-Wasser-Gemisch in einer Rutsche oder Rinne (15) innerhalb des Behälters (12) endet.
